# EUROPEAN PATENT SPECIFICATION

(11) **EP 3 256 235 B1**
(45) Date of publication and mention of the grant of the patent: **12.12.2018**
(21) Application number: 16707496.2
(22) Date of filing: 09.02.2016
(51) Int. Cl.: B01D 53/14, B01D 53/78, C05C 11/00

(54) **A PROCESS WHICH IS FOR THE REMOVAL OF GASEOUS BORON SPECIES FROM FURNACE FLUE GASES AND WHICH IS SUCH THAT AN AGRICULTURAL FERTILISER IS PRODUCED**
VERFAHREN ZUR ENTFERNUNG VON GASFÖRMIGEN BORSPEZIES AUS OFENRAUCHGASEN MIT GLEICHZEITIGER ERZEUGUNG EINES LANDWIRTSCHAFTLICHEN DÜNGEMITTELS
PROCÉDÉ DESTINÉ À L'ÉLIMINATION D'ESPÈCES DE BORE GAZEUSES DE GAZ DE COMBUSTION DE FOUR ET PERMETTANT LA PRODUCTION D'UN ENGRAIS AGRICOLE

(30) Priority: 14.02.2015 GB 201502542
(43) Date of publication of application: 20.12.2017
(73) Proprietor: Etimine, S.A., 3225 Bettembourg (LU)
(72) Inventor: HAYATI, Igan, Burnham Buckinghamshire SL1 8DS (GB)
(74) Representative: Jones, Graham Henry
(86) International application number: PCT/GB2016/000030
(87) International publication number: WO 2016/128706

(56) References cited:
- JP-A- S62 171 731
- US-A- 4 332 609
- US-A1- 2014 075 995

## Description

This invention relates to a process for the removal of gaseous boron species from furnace flue gases. More specifically, this invention relates to a process which is for the removal of gaseous boron species from flue gases, and which is also such that an agricultural fertiliser is produced. The furnace flue gases are such that they are produced by furnaces manufacturing boron-containing glass and frit products.

Boron-containing glass and frit products are manufactured in furnaces. During the production of the glass and frit products, various gases are generated. These gases are known as furnace flue gases and they have traditionally been allowed to pass through scrubbers and dust filters to capture most of the particulates and gaseous species in the flue gas stream. It is well known that one of the species that are produced by these furnaces are gaseous boron species, such as metaboric acid. Metaboric acid is volatile at high temperatures and can pass through dust filters without being captured and is consequently released to the environment.

Certain boron compounds such as boric acid have been classified by the EU as "reproductive toxicant". Hence release of boron to the environment is no longer acceptable.

Because the release of boron to the environment is not acceptable, there are various known methods for removing the boron from the furnace flue gases. A first known method for removing gaseous boron species such as metaboric acid from the furnace flue gases comprises spraying the furnace flue gases with sodium carbonate or sodium bi-carbonate powder. The sodium carbonate or bicarbonate reacts with the boron in the flue gases to form sodium borate. The resulting sodium borate powder is then recycled back to the furnace. This recycling is not acceptable in alkali-free glass furnaces where sodium is not tolerated. A second known method for removing gaseous boron species such as metaboric acid from the furnace flue gases comprises spraying the furnace flue gases with calcium hydroxide powder. The calcium hydroxide powder reacts with the gaseous metaboric acid to form calcium borate. The calcium borate powder is then recycled back to the furnace. Both of these known methods are not very effective, and they have a poor efficiency in capturing the boron in the furnace flue gases.

A third known method for removing gaseous boron species from the furnace flue gases comprises bubbling the furnace flue gases through proprietary suspensions. However, the proprietary suspension also removes other gaseous species. Hence, once the proprietary suspension is saturated with the furnace flue gas species, the saturated suspension is then dumped as waste in landfills, which is expensive and damaging to the environment.

In US 2014/075995 A1 magnesium hydroxide contaning water is utilised for absorbing boron species from furnace flue gas formed in a process for producing borosilicate glass.

US 4 332 609 A discloses the utilisation of monoethanolamine polyborate as agricultural fertiliser. It also mentions the favourable reaction of boric acid and monoethanolamine, however, not in conjunction with the separation of boron compounds from flue gases.

The classification of certain borate compounds as reproductive toxicants has led to the introduction of regulations for the control of the emitted boron from furnace flue gases. These regulations are becoming ever tighter in attempts to continually reduce the escape of boron to the environment.

It is an aim of the present invention to reduce the above mentioned problems, and thereby enable easier compliance with the regulations.

Accordingly, in one non-limiting embodiment of the present invention there is provided a process which is for the removal of gaseous boron species from furnace flue gases and which is such that an agricultural fertiliser is produced, the furnace flue gases being such that they are produced by furnaces manufacturing boron-containing glass and frit products, and the process comprising passing the furnace flue gases through monoethanolamine, with the monoethanolomine being used at a temperature which is greater than 90°C and less than 170°C, whereby the gaseous boron species are absorbed by the monoethanolamine, and whereby the monoethanolamine with the absorbed boron is usable as an agricultural fertiliser.

The process of the present invention is firstly advantageous in that the use of the monoethanolamine is at temperatures of greater than 90°C and less than 170°C enables the efficient absorption of the gaseous boron species into the monoethanolamine. The monoethanolamine is maintained at no more than 170°C because this is the temperature at which the monoethanolamine boils. Using the monoethanolamine at a temperature which is greater than 90°C and less than 170°C surprisingly gives a much greater absorption of the gaseous boron species than is the case if the monoethanolamine is used at 90°C and below. The efficiency of the absorption of the gaseous boron species in the monoethanolamine may reach 99% and this is much greater than the above mentioned known absorption methods of using a sodium carbonate or bicarbonate, or a calcium hydroxide powder.

The process of the present invention is secondly advantageous in that the monoethanolamine with the absorbed gaseous boron species is able to be used as an agricultural fertiliser. The production of the agricultural fertiliser is beneficial to the environment, and eliminates the necessity to dump the resulting product as in the case of the use of the above mentioned proprietary suspension.

The process of the present invention is thirdly advantageous in that the monoethanolamine is able to selectively absorb other elements from the furnace flue gases. Examples of such elements are sulphur, potassium and aluminium. These elements are all satisfactorily able to be present in agricultural fertilisers. Thus again there is no damage to the environment, and the escape of sulphur, potassium and aluminium in the form of gases or gaseous compounds is also avoided.

Preferably, the process of the present invention is one in which the monoethanolamine is used at a temperature of 150°C. Other temperatures may be employed within the range of more than 90°C and less than 170°C.

The process of the present invention may be one in which the monoethanolamine is placed across the gas flow in the furnace or the gases are bubbled through a reservoir of monoethanolamine.

Embodiments of the invention will now be described solely by way of example and with reference to the accompanying drawings in which:
Figure 1 shows the use of laboratory apparatus proving the process of the present invention;
Figure 2 shows apparatus required for proving the process of the present invention in an industrial E-glass furnace; and
Figure 3 shows apparatus for carrying out the process of the present invention on an industrial scale.

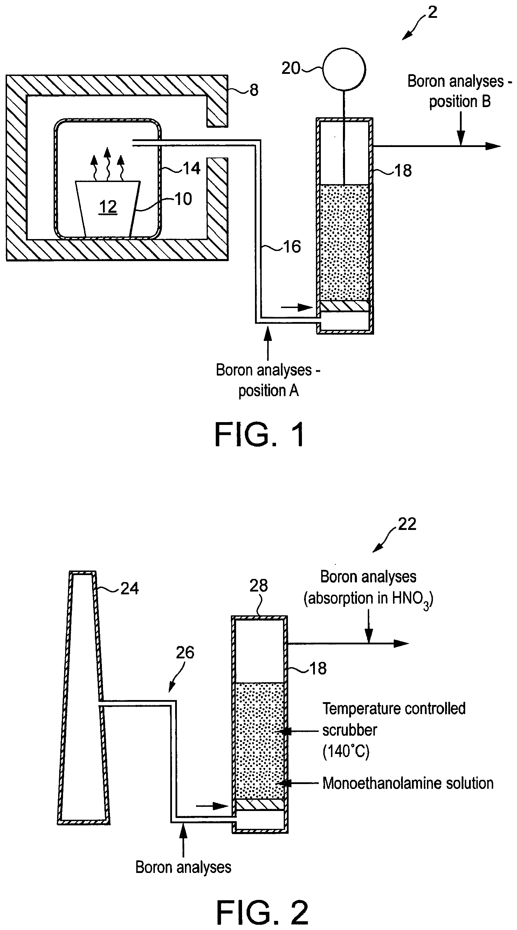

Referring to Figure 1, there is shown apparatus 2 for proving the effective removal of gaseous boron species from furnace flue gases, and such that an agricultural fertiliser is produced. The apparatus 2 shows a furnace 8 which contains a crucible 10 containing boric acid 12. The crucible 10 is covered by an inverted crucible 14. A conduit 16 leads to a column 18 containing the monoethanolamine which is heated and the temperature is controlled by a thermocouple 20.

The apparatus 2 operates such that the boric acid is placed inside the crucible 10. The crucible 10 is covered by the larger inverted crucible 14. A hole is drilled in the side of the inverted crucible 14, and through this hole the furnace flue gases containing evaporated boron species are able to pass through conduit 16 and be sampled.

In an example of use of the apparatus 2, the crucibles 10, 14 were placed in the furnace 8 at a temperature of 350°C. The furnace 8 is an electrically heated furnace. A glass tube heated to 270°C was inserted into the hole inside the crucible 14. A flow of nitrogen controlled by a mass flow controller was introduced into the furnace 8. At the exit of the glass tube, the furnace flue gas stream contained nitrogen and evaporated boron. The boron concentration in the furnace flue gases was analysed at regular intervals during the tests. For this analysis a part of the furnace flue gas stream was absorbed in a 1n HNO₃ solution, which was analysed by inductively coupled plasma afterwards. The absorption in the HNO₃ analysis is shown schematically in Figure 1 at positions A and B.

Sampling of the flue gas stream was started immediately after inserting the crucible 10 in the furnace 8. At first, the boron concentration in the flue gas at position A, before the column 18 was filled with monoethanolamine, was determined as a function of time after placing the crucible in the furnace.

After obtaining reproducible results for the measured boron concentration at position A, column 18 was filled with the monoethanolamine solution (approximately 1200ml, height 13cm) and the gases were sucked through the monoethanolamine column by a pump behind the sampling position B. The temperature of the monoethanolamine solution was maintained at 150°C.

In a first step, a known measured volume of the flue gases coming from the crucible containing molten boric acid at 350°C, was sampled at position A and bubbled through a series of gas washing bottles containing 1n HNO₃ solution. After time periods of 15, 30 and 90 minutes, starting after placement of the boric acid in the furnace, the boron concentration in the HNO₃ solution was analysed by inductively coupled plasma. From the measured boron concentrations and the volume of the furnace flue gases, the boron concentration in the flue gases was calculated. These values are shown in column 1 of Table 1.

Approximately 30 minutes after placement of the crucible with the boric acid inside the furnace 8, the boron concentration in the furnace flue gases showed a maximum value.

In a second step, the furnace flue gases that were extracted from the crucible 10 inside the furnace 8, were bubbled through column 18 filled with the monoethanolamine solution. The column was filled with approximately 1200ml of monoethanolamine solution, and the solution was heated to 150°C. The concentration of boron in the furnace flue gases after bubbling through the monoethanolamine solution was measured at position B by the same procedure as stated above. The absorption efficiency was then calculated and the results are shown in column 2 of the following Table 1. These results show that a reduction of more than 99% in the boron content of the flue gases was achieved at different times.

**TABLE 1**

| | **Without Monoethanolamine Analyses at Position A** | **With Monoethanolamine Analyses at Position B** | **% Efficiency** |
|---|---|---|---|
| Boric Acid in Crucible (g) | 70 | 70 | |
| Furnace Temperature (°C) | 350 | 350 | |
| Monoethanolamine Temperature (°C) | - | 150 | |
| Boron Concentration In Flue Gas after 15 min (mg/m³) | 269 | 0.26 | 99.90% |
| Boron Concentration In Flue Gas after 30 min (mg/m³) | 924 | 0.34 | 99.96% |
| Boron Concentration In Flue Gas after 90 min (mg/m³) | 170 | 0.23 | 99.86% |

With regard to Figure 2, there is shown apparatus 22 comprising a flue gas channel 24 from a glass furnace, a heated probe 26, and a column 28.

The furnace is an industrial glass furnace producing boron-containing E-glass fibres. The furnace flue gases pass along the flue gas channel 24. These furnace flue gases were sampled via the probe 26, which was heated to 400°C. The sampled furnace flue gases containing boron were bubbled through a 1 litre column 28 containing monoethanolamine. The column 28 was made of glass. The temperature of the monoethanolamine solution was maintained at 140°C. The industrial test operating conditions are shown below:

| | |
|---|---|
| . Furnace gas flow | = 12,000 m³/h |
| . Boron in flue gas measured | = 230 mg/m³ |
| . Gas temperature | = 350°C |
| . Probe sample taken | = 130 l/h (∼0.001 % of Total Flow) |
| . Monoethanolamine in column | = ∼1 Litre |
| . Temperature of monoethanolamine | = 140°C |

The tube extending between the heated sampling probe and the monoethanolomine column 28 was flushed continuously by circulating monoethanolamine solution that was pumped by a hose pump from the column 28 to the exit of the heated probe. In this manner, any condensing boron was able to be removed from the tube, and blocking of the tube was avoided.

The boron in the furnace flue gases was absorbed by the monoethanolamine in column 28. The boron concentration in the furnace flue gases at the exit of the column 28 was measured by absorption in a 1n HNO₃ solution. These solutions were analysed for boron by inductively coupled plasma. The boron concentration in the original furnace flue gas stream was also analysed several times during the test by absorption in HNO₃ and analysis by inductively coupled plasma.

The measurement of the boron concentration in the flue gases behind the monoethanolamine absorption column 28 was taken after periods of 30, 90 and 200 minutes.

After industrial testing, analysis of all the samples from the industrial test by the inductively coupled plasma and calculation of the absorption efficiency was obtained. The results are shown in the following Table 2. These results in Table 2 show that there was obtained a greater than 99% boron absorption efficiency. The analysis also showed that other elements such as sulphur, potassium, sodium and aluminium were also captured by the monoethanolamine. All these elements are acceptable in fertilisers.

With regard to industrial test operating conditions, it was noticed during the trial that water in the flue gas dissolved in the monoethanolamine and that the flue gas formed a ∼1:1 monoethanolamine/water azeotrope. As a result, the mixture evaporated at lower temperature but was trapped in condensation bottles. Hence, in an industrial application, there will be a need to condense and recycle any evaporated monoethanolamine/water vapour.

**TABLE 2**

| | **Before Monoethanolamine** | **After Monoethanolamine** | **% Efficiency** |
|---|---|---|---|
| Flue Gas Temperature (°C) | 400 | 400 | |
| Monoethanolamine Temperature (°C) | - | 140 | |
| Boron Concentration In Flue Gas after 30 min (mg/m³) | 230 | 0.61 | 99.73% |
| Boron Concentration In Flue Gas after 90 min (mg/m³) | 230 | 0.46 | 99.80% |
| Boron Concentration In Flue Gas after 200 min (mg/m³) | 230 | 1.40 | 99.39% |

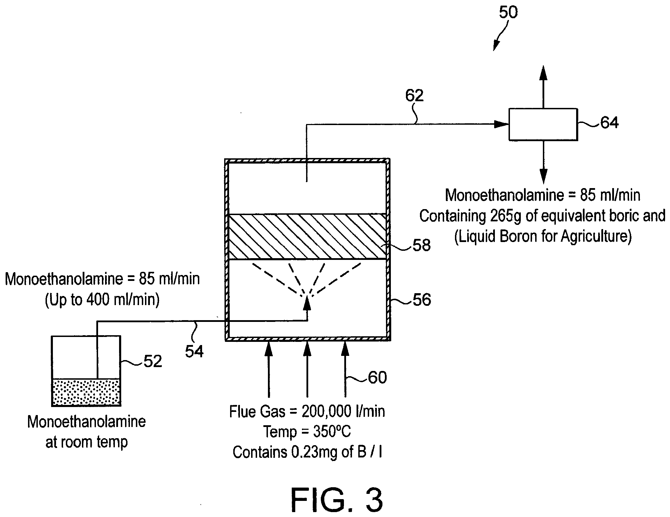

Referring now to Figure 3, there is shown apparatus 50 comprising a monoethanolamine reservoir 52 connected by a conduit 54 to a column 56. The column 56 contains a packed bed of ceramic balls 58. Gases enter the column 56 as indicated by arrows 60. Gases leave the column 56 via a conduit 62. The conduit 62 connects to a condenser 64. The apparatus 50 is an example of a scrubbing apparatus, without monoethanolamine recycle.

The monoethanolamine is sprayed at 85 ml/min in the direction of gas flow. The monoethanolamine may be sprayed at up to 400 ml/min. The reservoir 52 is kept at room temperature. The flue gases entering the column 56 as shown by the arrow 60 may enter at 200,000 l/min. The temperature of the flue gases is 350°C. The flue gases contain 0.23mg of boron per litre.

At the condenser 64, monoethanolamine flows at 85 ml/min. and will contain an equivalent of 265g of boric acid, which it is able to be used as an agricultural fertiliser.

It is to be appreciated that the embodiments of the invention described above with reference to the accompanying drawings and examples have been given by way of example only and that modifications may be effected. Individual components shown in the drawings and information given in the examples are not limited to use in their drawings and examples, and they may be used in other drawings and examples and in all aspects of the invention.

## Claims

1. A process which is for the removal of gaseous boron species from furnace flue gases and which is such that an agricultural fertiliser is produced, the furnace flue gases being such that they are produced by furnaces manufacturing boron-containing glass and frit products, and the process comprising passing the furnace flue gases through monoethanolamine, with the monoethanolomine being used at a temperature which is greater than 90°C and less than 170°C, whereby the gaseous boron species are absorbed by the monoethanolamine, and whereby the monoethanolamine with the absorbed boron is usable as an agricultural fertiliser.

2. A process according to claim 1 in which the monoethanolamine is used to 150°C.

3. A process according to claim 1 or claim 2 in which the monoethanolamine is placed across the gas flow in the furnace or the gases are bubbled through a reservoir of monoethanolamine.

## Patentansprüche

1. Verfahren zur Entfernung von gasförmigen Borspezies aus Ofenrauchgasen, das so beschaffen ist, dass ein landwirtschaftlicher Dünger erhalten wird, wobei die Ofenrauchgase so beschaffen sind, dass sie in Öfen zur Herstellung von borhaltigen Glas- und Frittenprodukten anfallen, und das Verfahren das Leiten der Ofenrauchgase durch Monoethanolamin umfasst, wobei das Monoethanolamin bei einer Temperatur von mehr als 90 °C und weniger als 170 °C verwendet wird, wodurch die gasförmigen Borspezies durch das Monoethanolamin absorbiert werden und wodurch das Monoethanolamin mit dem absorbierten Bor als landwirtschaftliches Düngemittel verwendbar ist.

2. Verfahren nach Anspruch 1, bei dem das Monoethanolamin bis 150 °C verwendet wird.

3. Verfahren nach Anspruch 1 oder Anspruch 2, bei dem das Monoethanolamin über dem Gasstrom im Ofen angeordnet wird oder die Gase durch einen Vorrat von Monoethanolamin perlen gelassen werden.

## Revendications

1. Procédé qui est destiné à l'élimination des espèces de bore gazeuses à partir de gaz de carneau de four et qui est tel qu'un fertilisant agricole est produit, les gaz de carneau de four étant tels qu'ils sont produits par des fours fabriquant des produits de fritte et de verre contenant du bore, et le procédé comprenant le passage des gaz de carneau de four dans de la monoéthanolamine, la monoéthanolamine étant utilisée à une température qui est supérieure à 90°C et inférieure à 170°C, ce par quoi les espèces de bore gazeuses sont absorbées par la monoéthanolamine, et ce par quoi la monoéthanolamine avec le bore absorbé est utilisable comme fertilisant agricole.

2. Procédé selon la revendication 1, dans lequel la monoéthanolamine est utilisée à 150°C.

3. Procédé selon la revendication 1 ou la revendication 2, dans lequel la monoéthanolamine est placée à travers le flux de gaz dans le four ou on fait barboter les gaz dans un réservoir de monoéthanolamine.
